# EUROPÄISCHE PATENTSCHRIFT

(11) **EP 1 248 716 B1**
(45) Veröffentlichungstag und Bekanntmachung des Hinweises auf die Patenterteilung: **30.08.2006**
(21) Anmeldenummer: 01967038.9
(22) Anmeldetag: 28.08.2001
(51) Int. Cl.: B60S 1/04

(54) **WISCHERGEHÄUSE UND VERFAHREN ZUM HERSTELLEN EINES WISCHERGEHÄUSES**
WIPER HOUSING AND METHOD FOR PRODUCING SAID WIPER HOUSING
MONTURE DE LAVE-GLACE ET SON PROCEDE DE FABRICATION

(30) Priorität: 09.11.2000 DE 10055426
(43) Veröffentlichungstag der Anmeldung: 16.10.2002
(73) Patentinhaber: ROBERT BOSCH GMBH, 70442 Stuttgart (DE)
(72) Erfinder: ZIMMER, Joachim, 77880 Sasbach (DE)
(74) Vertreter: Gleiss & Grosse
(86) Internationale Anmeldenummer: PCT/DE2001/003273
(87) Internationale Veröffentlichungsnummer: WO 2002/038425

(56) Entgegenhaltungen:
- EP-A- 0 739 792
- EP-A- 0 916 559
- DE-A- 19 806 855
- DE-A- 19 808 441
- DE-A- 19 833 488

## Beschreibung

Die Erfindung betrifft eine Verwendung eines Wischerlagergehäuses mit einem Lagerbereich und mindestens einem Befestigungselement.

### Stand der Technik

Wischerlagergehäuse, welche auch vereinfacht als Wischerlager bezeichnet werden, finden hauptsächlich im Kraftfahrzeugbereich Anwendung. Sie haben die Aufgabe, eine Wischerwelle beziehungsweise die Lagerkurbel drehbar zu lagern. Im Allgemeinen ist das Wischerlagergehäuse mit mindestens einem Befestigungselement ausgestattet. Dieses kann beispielsweise als Befestigungsauge realisiert sein, weiches an der Karosserie eines Kraftfahrzeugs befestigt wird. Weiterhin sind an bestimmten Typen von Wischerlagergehäusen rohrförmige Bereiche angeordnet. Diese rohrförmigen Bereiche werden auf Haltestangen eines Wischersystems aufgeschoben.

Es ist bekannt, Wischerlagergehäuse beispielsweise aus Aluminium- oder Zink-Druckguss, Kunststoff-Spritzguss oder als Blechbiegeteil auszuführen.

Die Geometrie des Wischerlagers legt weiterhin die Ausrichtung der Wischerachse bezogen auf die Karosserie und insbesondere bezogen auf die zu reinigende Fahrzeugscheibe eines Kraftfahrzeugs fest. Die Wischerachsenstellung ist fahrzeugspezifisch, das heißt sie hängt von der Geometrie der Windschutzscheibe ab. Außerdem muss die Wischerlagergeometrie auch im Hinblick auf die Befestigung an der Karosserie je nach Fahrzeugtyp individuell angepasst werden. Aus diesem Grund müssen für nahezu jeden Fahrzeugtyp die Wischerlager neu angepasst werden, so dass für eine Fertigung der Wischerlagergehäuse hohe Werkzeugkosten anfallen.

Blechwischerlagergehäuse, wie zum Beispiel in der DE 198 08 441 A1 offenbart, haben den Vorteil, dass sie insbesondere bei großen Stückzahlen kostengünstig sind. Die Abhängigkeit der Kosten von der Stückzahl ist mit der Notwendigkeit zu erklären, ein komplexes und aufwendiges Werkzeug mit beispielsweise 15 bis 20 Werkzeugstufen zu verwenden.

Ein weiterer Problemkreis im Hinblick auf Wischerlagergehäuse betrifft die Kraftfahrzeugsicherheit. Wischerlagergehäuse, welche starr ausgebildet sind, bedeuten ein Sicherheitsrisiko, beispielsweise beim Aufprall eines Fußgängers auf ein fahrendes Kraftfahrzeug. Aus der DE 198 33 488 A1 oder aus der EP 0 739 792 A1 ist es daher bereits bekannt, Wischerlagergehäuse mit einer Sollbruchstelle zu versehen, die bei Einwirkung einer axialen Kraft auf das Wischerlagergehäuse bricht. Bei dem gattungsgemäßen Wischerlagergehäuse aus der DE 198 33 488 A1 ist die Sollbruchstelle als verformbarer Übergangsbereich zwischen dem Lagerbereich und dem Befestigungselement angeordnet. Weiter ist es möglich, zusätzlich ein gewelltes Rohr am Wischerlagergehäuse anzuordnen, welches sich bei einem Aufprall verformen kann. Diese zusätzlichen Maßnahmen führen ebenfalls in unerwünschter Weise zu zusätzlichen Kosten.

### Vorteile der Erfindung

Die Erfindung nutzt die Verformbarkeit des Übergangsbereichs zwischen dem Lagerbereich und dem Befestigungselement aus, um den Winkel der Wischerachse bezüglich der Fahrzeugkarosserie durch eine entsprechende Formgebung des Übergangsbereichs nach Bedarf zu verändern, d.h. an die Geometrie der Windschutzscheibe anzupassen. Dadurch ist es möglich, denselben Grundtyp für unterschiedliche Kraftfahrzeuge zu verwenden, was die Werkzeugkosten für die Herstellung von fahrzeugspezifischen Wischerlagern deutlich reduziert. Zusätzlich können durch die dann mögliche Stückzahlerhöhung Kosteneinsparungen erfolgen.

Vorzugsweise ist als Befestigungselement ein Befestigungsauge vorgesehen. Mit einem solchen Befestigungsauge kann das Wischerlagergehäuse an der Fahrzeugkarosserie befestigt werden. Aufgrund der Verformbarkeit des Übergangsbereichs zwischen dem Lagerbereich und dem Befestigungsbereich kann somit eine Einstellung des Wischerachsenwinkels erfolgen.

Es ist bevorzugt, wenn als Befestigungselement ein rohrförmiger Bereich vorgesehen ist. Mit einem derartigen rohrförmigen Bereich wird das Wischerlagergehäuse im Allgemeinen auf eine Haltestange eines Wischersystems aufgesteckt. Das Wischergehäuse ist auf dem rohrförmigen Bereich drehbar. Durch einen verformbaren Bereich, welcher zwischen dem Lagerbereich und dem rohrförmigen Bereich angeordnet sein kann, stehen zusätzliche Freiheitsgrade für die Ausrichtung der Wischerachse zur Verfügung.

Es ist bevorzugt, dass die Verformbarkeit des mindestens einen Übergangsbereiches durch einen gewellten Bereich realisiert ist. Ein solcher gewellter Bereich ist im Allgemeinen einfach herzustellen, und er lässt sich so ausführen, dass eine ausreichende Verformbarkeit zur Verfügung steht.

Insbesondere ist es vorteilhaft, wenn das Wischerlagergehäuse als Blechbiegeteil ausgeführt ist. Dies ist eine kostengünstige Variante von Wischerlagergehäusen. Besonders bei großen Stückzahlen kann die Erfindung ihre vorteilhaften kostensparenden Wirkungen auf diese Weise entfalten.

Ferner ist es vorteilhaft, wenn das Wischerlager bei erhöhter axialer Krafteinwirkung verformbar beziehungsweise dehnbar ist. Auf diese Weise kann erreicht werden, dass sich der Lagerbereich bei einer einwirkenden Axialkraft verschieben kann. Auf diese Weise werden die Krafteinwirkungen auf Personen bei einem Aufprall reduziert.

Es kann vorteilhaft sein, wenn eine Verformbarkeit beziehungsweise eine Dehnbarkeit plastisch ist. Somit kann eine Verformung des Wischerlagergehäuses irreversibel gestaltet werden, so dass man im Sinne von Sicherheitserwägungen gezwungen ist, nach einem Aufprall das mitunter ernsthaft beschädigte Wischerlagergehäuse auszutauschen.

Es kann aber auch vorteilhaft sein, wenn eine Verformbarkeit beziehungsweise eine Dehnbarkeit elastisch ist. Das Wischerlagergehäuse geht in diesem Fall, insbesondere nach einem leichten Aufprall, wieder in seine Ausgangsstellung zurück, so dass ohne eine weitere Reparatur ein funktionsfähiges Wischersystem vorliegt.

Die Erfindung baut auf dem Stand der Technik dadurch auf, dass mindestens ein zwischen dem Lagerbereich und dem Befestigungselement eingebrachter, bei einer Kollision mit einem Fußgänger verformbarer Übergangsbereich zur fahrzeugspezifischen Anpassung der Ausrichtung einer Achse der Wischerwelle oder Lagerkurbel durch Verformung des Übergangsbereichs verwendet wird. Durch die Verformbarkeit des Übergangsbereiches zwischen dem Lagerbereich und dem Befestigungselement kann der Winkel der Wischerachse bezüglich der Fahrzeugkarosserie variabel gewählt werden. Es ist daher möglich, denselben Grundtyp für unterschiedliche Kraftfahrzeuge zu verwenden, was die Werkzeugkosten für die Erstellung von fahrzeugspezifischen Wischerlagern deutlich reduziert. Zusätzlich können durch die dann mögliche Stückzahlerhöhung Kosteneinsparungen erfolgen.

Vorzugsweise erfolgt das Formen des verformbaren Übergangsbereiches in einem Formwerkzeug. Der Herstellungsprozess kann demnach so erfolgen, dass die formgebenden Werkzeugstufen in das Werkzeug, beispielsweise als Wechseleinsätze, integriert werden. In den ersten Werkzeugstufen wird somit zunächst die universelle Gestalt des Wischerlagergehäuses mit den verformbaren Bereichen gefertigt. In den letzten Werkzeugstufen wird dann die für die konkrete Applikation gewünschte. Formgebung durchgeführt.

Es kann aber auch sinnvoll sein, wenn das Formen des verformbaren Übergangsbereiches außerhalb eines Werkzeugs erfolgt. Die Formgebung kann also unabhängig von dem eigentlichen Herstellungsprozess erfolgen.

Es ist bevorzugt, dass als Befestigungselement ein rohrförmiger Bereich vorgesehen ist und dass der rohrförmige Bereich vor dem Formen des Übergangsbereiches auf ein Halterohr gesteckt wird, wobei eine Verdrehung um eine axiale Richtung des rohrförmigen Bereiches erfolgen kann. Es ist also möglich, ein universell geformtes Wischerlagergehäuse erst bei der Montage in seine endgültige Form zu bringen, wobei der zusätzliche Freiheitsgrad der Verdrehung auf einem Halterohr ausgenutzt wird.

Vorzugsweise wird ein gewellter Übergangsbereich eingeformt. Ein solcher gewellter Bereich ist im Allgemeinen einfach herzustellen, und er lässt sich so ausführen, dass eine ausreichende Verformbarkeit zur Verfügung steht.

Weiterhin ist von Vorteil, wenn als Ausgangswerkstück ein Blechteil verwendet wird. Dies ist eine kostengünstige Variante von Wischerlagergehäusen. Besonders bei großen Stückzahlen kann die Erfindung ihre vorteilhaften kostensparenden Wirkungen auf diese Weise entfalten.

Der Erfindung liegt die überraschende Erkenntnis zugrunde, dass aufgrund der Verformbarkeit von Übergangsbereichen ein universell einsetzbares Wischerlagergehäuse gefertigt werden kann. Durch die Verformungsbereiche kann die erforderliche Wischerachsenstellung mit vergleichsweise geringem Aufwand im Wischerlager realisiert werden, insbesondere durch Anpassung der Orientierung des Verbindungszapfens zum Platinenrohr und/oder der Orientierung des Befestigungsauges sowie aufgrund der freien Ausrichtung des Wischerlagers durch Verdrehung gegenüber dem Platinenrohr. Die Kosteneinsparungen beruhen zum einen darauf, dass keine individuellen Werkzeuge für jeden neuen Fahrzeugtyp zur Verfügung gestellt werden müssen, wobei hier insbesondere die Erhöhung der Stückzahl der gefertigten Wischerlagergehäuse eine wichtige Rolle spielt.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine perspektivische Ansicht eines erfindungsgemäßen Wischerlagergehäuses;
- Figur 2: eine weitere perspektivische Ansicht eines erfindungsgemäßen Wischerlagergehäuses;
- Figur 3: eine weitere perspektivische Ansicht eines erfindungsgemäßen Wischerlagergehäuses;
- Figur 4: eine Schnittansicht eines erfindungsgemäßen Wischerlagergehäuses in einem ersten Zustand;
- Figur 5: eine Schnittansicht eines erfindungsgemäßen Wischerlagergehäuses in einem zweiten Zustand;
- Figur 6: zwei perspektivische Ansichten erfindungsgemäßer Wischerlagergehäuse in unterschiedlichen Verformungszuständen;
- Figur 7: eine weitere perspektivische Ansicht eines erfindungsgemäßen Wischerlagergehäuses;
- Figur 8: eine Schnittansicht eines erfindungsgemäßen Wischerlagergehäuses in einem unverformten Zustand; und
- Figur 9: eine weitere Schnittansicht eines erfindungsgemäßen Wischerlagergehäuses in einem verformten Zustand.

### Beschreibung der Ausführungsbeispiele

In der folgenden Beschreibung der bevorzugten Ausführungsbeispiele bezeichnen gleiche Bezugszeichen gleiche oder ähnliche Elemente.

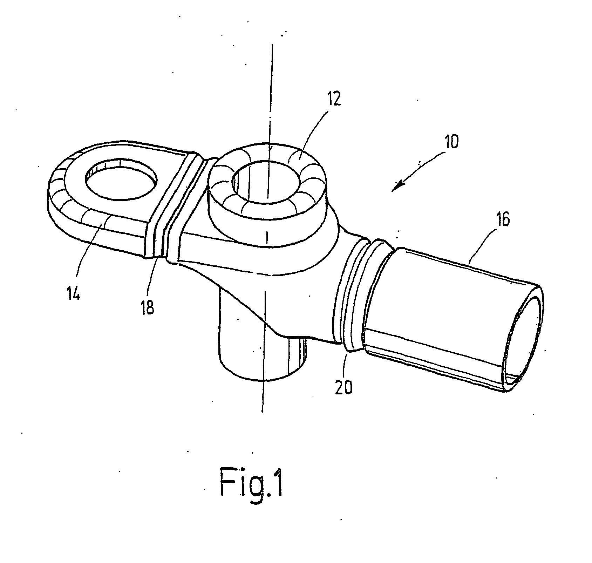

In Figur 1 ist ein erfindungsgemäßes Wischerlagerge häuse 10 in perspektivischer Darstellung gezeigt. Das Wischerlagergehäuse 10 hat einen zylindrisch geformten Lagerbereich 12. In diesem Lagerbereich 12 wird die Wischerwelle beziehungsweise die Lagerkurbel drehbar gelagert. Das Wischerlagergehäuse 10 weist weiterhin zwei Befestigungselemente auf, von denen eines als Befestigungsauge 14 und das andere als rohrförmiger Bereich 16 ausgebildet sind. Mit dem Befestigungsauge 14 wird das Wischerlagergehäuse 10 im Allgemeinen an einer Kraftfahrzeugkarosserie befestigt. Der rohrförmige Bereich 16 wird im Allgemeinen auf eine Haltestange eines Wischersystems aufgesteckt, und nach Ausrichtung des Wischerlagergehäuses kann eine Verschweißung des rohrförmigen Bereiches 16 an der Haltestange erfolgen. In dem Ausführungsbeispiel gemäß Figur 1 sind sowohl das Befestigungsauge 14 als auch der rohrförmige Bereich 16 durch verformbare Bereiche 18, 20 mit dem Lagerbereich 12 verbunden. Die verformbaren Bereiche sind durch eine Wellung realisiert.

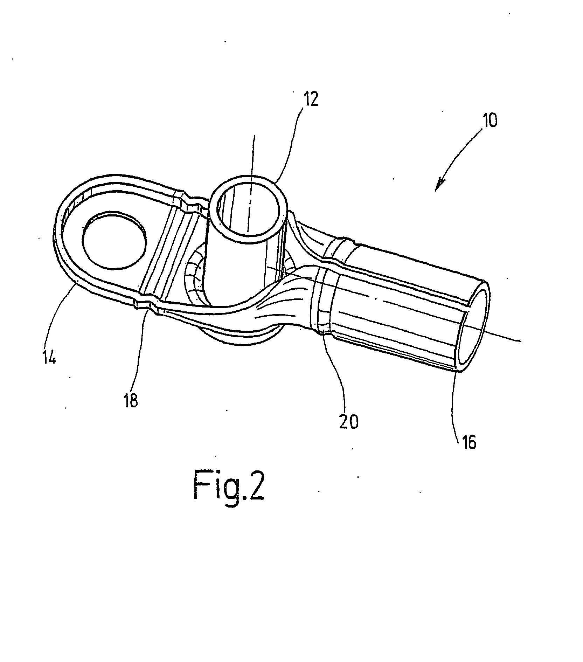

Figur 2 zeigt das Wischerlagergehäuse 10, welches in Figur 1 in einer ersten perspektivischen Darstellung gezeigt ist, in einer zweiten perspektivischen Darstellung.

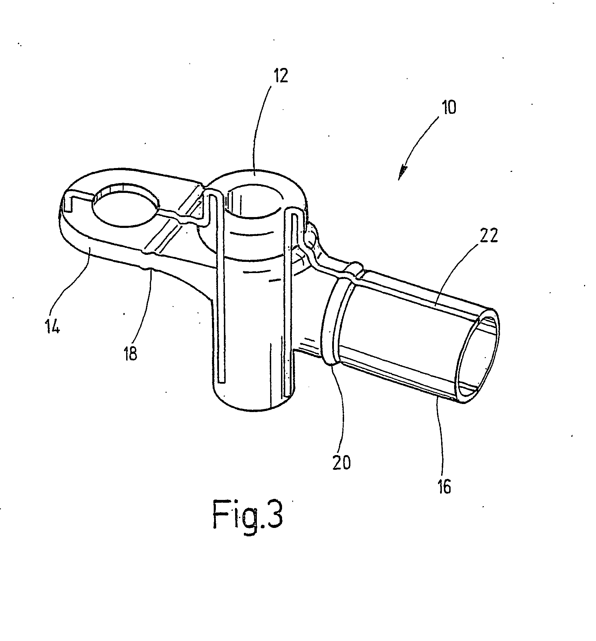

In Figur 3 ist ebenfalls eine perspektivische Darstellung eines Wischerlagergehäuses 10 gezeigt. Zusätzlich ist eine Linie 22 zur Kennzeichnung einer Schnittebene eingezeichnet.

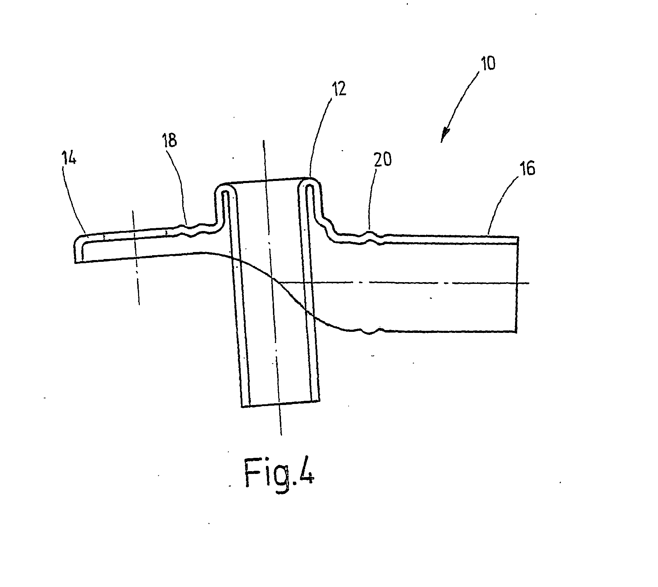

In Figur 4 ist das Wischerlagergehäuse gemäß Figur 3 in einer Schnittansicht entlang der in Figur 3 mit 22 gekennzeichneten Linie gezeigt. Figur 4 zeigt die Grundgeometrie des Wischerlagergehäuses 10 und mithin einen nichtverformten Zustand. Es ist erkennbar, dass das Wischerlagergehäuse einstückig ausgeführt ist, wobei vorzugsweise die Blechbiegetechnik angewandt wurde.

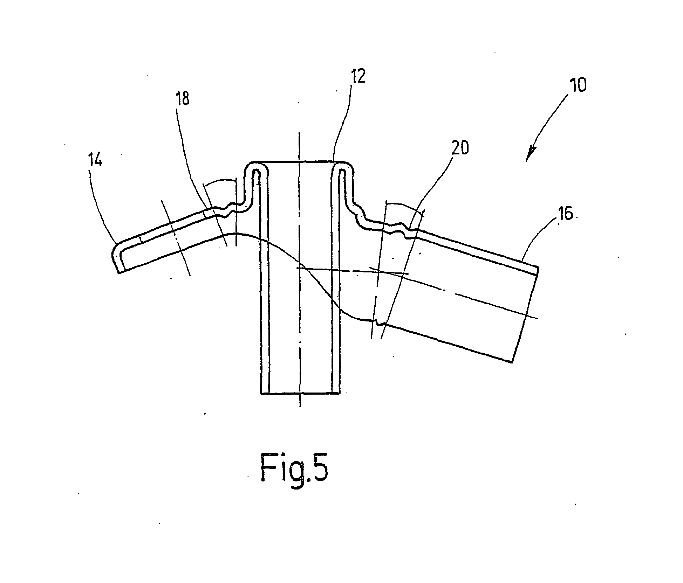

In Figur 5 ist das Wischerlagergehäuse gemäß Figur 3 in einer Schnittansicht gezeigt, welche derjenigen aus Figur 4 entspricht, wobei hier allerdings ein verformter Zustand dargestellt ist. Bei den verformbaren Bereichen 18, 20 sind die Verformungswinkel angedeutet.

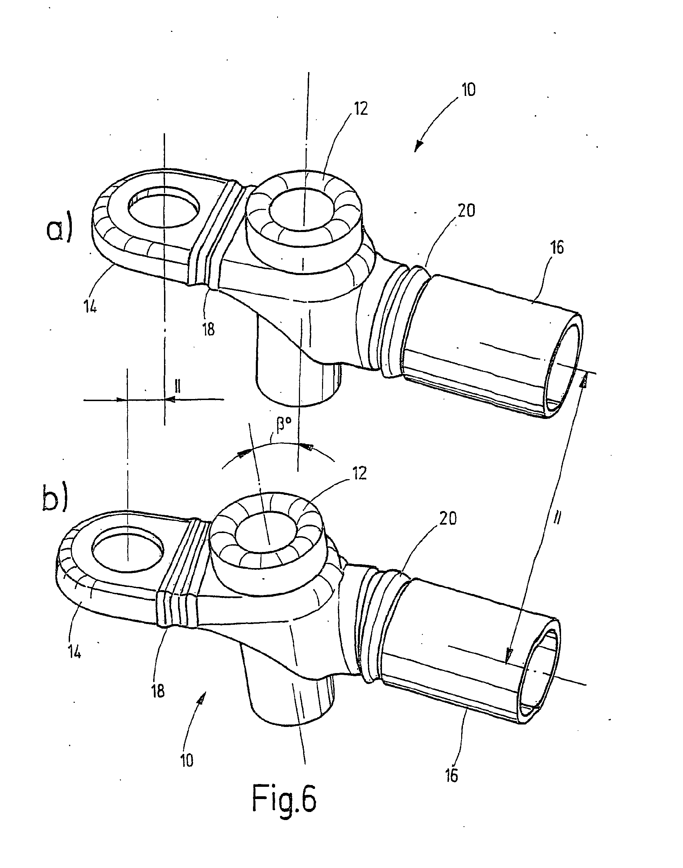

Figur 6 zeigt zwei Wischerlagergehäuse 10. Das Wischerlagergehäuse gemäß Figur 6a und das Wischerlagergehäuse gemäß Figur 6b haben parallele Achsen im Hinblick auf die Ausrichtung des Befestigungsauges 14 und im Hinblick auf die Ausrichtung des Befestigungsrohres 16. Aufgrund der verformbaren Bereiche ist es allerdings möglich, dass die Achsen des Lagerbereiches einen Winkel β miteinander einschließen, so dass die Wischerachse bezüglich der zu reinigenden Kraftfahrzeugscheibe ausgerichtet werden kann.

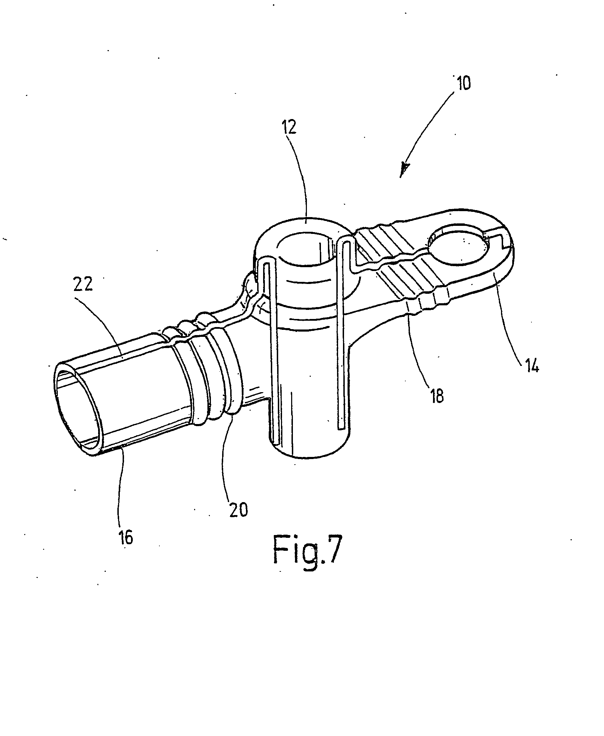

Figur 7 zeigt eine weitere Ausführungsform eines erfindungsgemäßen Wischerlagers 10. Die Besonderheit an diesem Wischerlager 10 besteht darin, dass die verformbaren Bereiche 18, 20 zwischen dem Lagerbereich 12 und dem Befestigungsauge 14 beziehungsweise dem rohrförmigen Bereich 16 verlängert ausgebildet sind. Damit steht zum einen eine größere Verformbarkeit zur Verfügung, was den Einsatzbereich des Wischerlagergehäuses vergrößern kann. Zum anderen bietet die Variante gemäß Figur 7 einen vergrößerten Aufprallschutz bei Unfällen. In Figur 7 ist eine Schnittlinie 22 eingetragen.

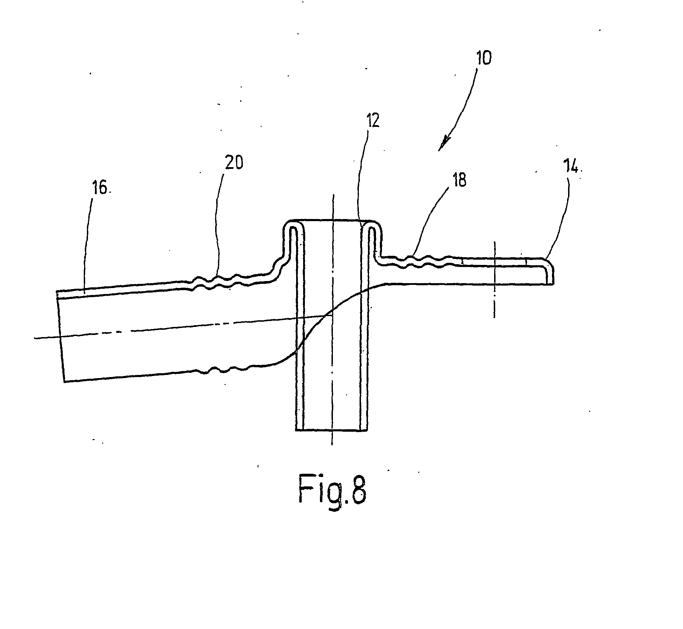

Figur 8 zeigt eine Darstellung des Wischerlagergehäuses 10 gemäß Figur 7 entlang der Schnittlinie 22 aus Figur 7. Es ist die Grundgeometrie des Wischerlagergehäuses 10 dargestellt.

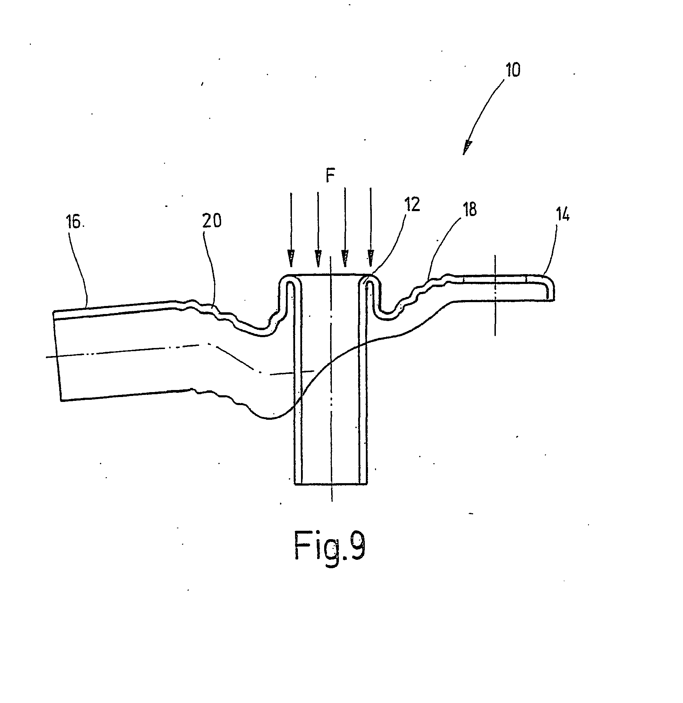

In Figur 9 ist das Wischerlagergehäuse gemäß Figur 7 in einem verformten Zustand dargestellt, wobei die Perspektive derjenigen aus Figur 8 entspricht. Es ist ein Zustand gezeigt, bei dem eine Kraft F in axialer Richtung auf den Lagerbereich 16 wirkt, was beispielsweise beim Aufprall eines Fußgängers der Fall sein kann. Es ist zu erkennen, dass sich die verformbaren Bereiche 18, 20 so verformt haben, dass der Lagerbereich 12 nach unten abtauchen kann. Somit wird der Aufprall eines Fußgängers gedämpft. Die Verformbarkeit beziehungsweise die Dehnbarkeit der Übergangsbereiche 18, 20 kann plastisch oder elastisch ausgeführt sein.

Die vorhergehende Beschreibung der Ausführungsbeispiele gemäß der vorliegenden Erfindung dient nur zu illustrativen Zwecken und nicht zum Zwecke der Beschränkung der Erfindung.

## Patentansprüche

1. Verwendung eines Wischerlagergehäuses mit einem Lagerbereich (12) zur drehbaren Lagerung einer Wischerwelle oder Lagerkurbel, mindestens einem Befestigungselement (14, 16) zur Befestigung des Wischerlagergehäuses und mindestens einem bei einer Kollision mit einem Fußgänger verformbaren Übergangsbereich (18, 20) zwischen dem Lagerbereich (12) und dem Befestigungselement (14, 16) zur fahrzeugspezifischen Anpassung der Ausrichtung einer Achse der Wischerwelle oder Lagerkurbel durch Verformung des Übergangsbereichs (18, 20) in unterschiedlichen Kroftfahrzeugen.

2. Verwendung eines Wischerlagergehäuses nach Anspruch 1, **dadurch gekennzeichnet, dass** als Befestigungselement ein Befestigungsauge (14) vorgesehen ist.

3. Verwendung eines Wischerlagergehäuses nach Anspruch 1 oder 2, **dadurch gekennzeichnet, dass** als Befestigungselement ein rohrförmiger Bereich (16) vorgesehen ist.

4. Verwendung eines Wischerlagergehäuses nach einem der vorangehenden Ansprüche, **dadurch gekennzeichnet, dass** die Verformbarkeit des mindestens einen Übergangsbereiches (18, 20) durch einen gewellten Bereich realisiert ist.

5. Verwendung eines Wischerlagergehäuses nach einem der vorangehenden Ansprüche, **dadurch gekennzeichnet, dass** es als Blechbiegeteil ausgebildet ist.

6. Verwendung eines Wischerlagergehäuses nach einem der vorangehenden Ansprüche, **dadurch gekennzeichnet, dass** es bei erhöhter axialer Krafteinwirkung F verformbar beziehungsweise dehnbar ist.

7. Verwendung eines Wischerlagergehäuses nach einem der vorangehenden Ansprüche, **dadurch gekennzeichnet, dass** eine Verformbarkeit beziehungsweise eine Dehnbarkeit plastisch ist.

8. Verwendung eines Wischerlagergehäuses nach einem der vorangehenden Ansprüche, **dadurch gekennzeichnet, dass** eine Verformbarkeit beziehungsweise eine Dehnbarkeit elastisch ist.

## Claims

1. Use of a wiper bearing housing with a bearing region (12) for the rotatable mounting of a wiper shaft or bearing crank, at least one fastening element (14, 16) for fastening the wiper bearing housing, and at least one transition region (18, 20), which is deformable upon collision with a pedestrian, between the bearing region (12) and the fastening element (14, 16) for the vehicle-specific adaptation of the orientation of an axis of the wiper shaft or bearing crank by deformation of the transition region (18, 20) in different motor vehicles.

2. Use of a wiper bearing housing according to Claim 1, **characterized in that** a fastening eye (14) is provided as fastening element.

3. Use of a wiper bearing housing according to Claim 1 or 2, **characterized in that** a tubular region (16) is provided as fastening element.

4. Use of a wiper bearing housing according to one of the preceding claims, **characterized in that** the deformability of the at least one transition region (18, 20) is realized by a corrugated region.

5. Use of a wiper bearing housing according to one of the preceding claims, **characterized in that** it is designed as a sheet-metal bent part.

6. Use of a wiper bearing housing according to one of the preceding claims, **characterized in that** it is deformable or extendable in the case of an increased axial action of force F.

7. Use of a wiper bearing housing according to one of the preceding claims, **characterized in that** a deformability or an extensibility is plastic.

8. Use of a wiper bearing housing according to one of the preceding claims, **characterized in that** a deformability or an extensibility is elastic.

## Revendications

1. Utilisation d'un boîtier de palier d'essuie-glace comportant une zone de palier (12) pour recevoir à rotation un axe d'essuie-glace ou une manivelle, notamment un élément de fixation (14, 16) pour fixer le boîtier du palier d'essuie-glace et au moins une zone transitoire déformable (18, 20) en cas de collision avec un piéton, entre la zone de palier (12) et l'élément de fixation (14, 16) pour adapter l'alignement de l'axe géométrique de l'axe d'essuie-glace ou de la manivelle de palier de façon spécifique au véhicule par déformation de la zone transitoire (18, 20) dans différents véhicules automobiles.

2. Utilisation d'un boîtier d'essuie-glace selon la revendication 1,
**caractérisée en ce que**
l'élément de fixation est un oeillet de fixation (14).

3. Utilisation d'un boîtier d'essuie-glace selon les revendications 1 ou 2,
**caractérisée en ce que**
l'élément de fixation comporte une zone tubulaire (16).

4. Utilisation d'un boîtier d'essuie-glace selon l'une des revendications précédentes,
**caractérisée en ce que**
la déformabilité d'au moins une zone transitoire (18, 20) est réalisée par une zone de forme ondulée.

5. Utilisation d'un boîtier d'essuie-glace selon l'une quelconque des revendications précédentes,
**caractérisée en ce que**
le boîtier est une pièce en tôle pliée.

6. Utilisation d'un boîtier d'essuie-glace selon l'une quelconque des revendications précédentes,
**caractérisée en ce qu'**
il est déformable ou extensible sous l'effet d'une force axiale F importante.

7. Utilisation d'un boîtier d'essuie-glace selon l'une quelconque des revendications précédentes,
**caractérisée en ce que**
la déformabilité ou l'extensibilité se font dans le domaine plastique.

8. Utilisation d'un boîtier d'essuie-glace selon l'une quelconque des revendications précédentes,
**caractérisée en ce que**
la déformabilité ou l'extensibilité se font dans le domaine élastique.
